# EUROPEAN PATENT APPLICATION

(11) **EP 4 542 718 A1**
(43) Date of publication of application: **23.04.2025**
(21) Application number: 23843410.4
(22) Date of filing: 20.07.2023
(51) Int. Cl.: H01M 10/0585, H01M 10/42, H01M 10/052

(54) **ELECTRODE ASSEMBLY AND LITHIUM SECONDARY BATTERY COMPRISING SAME**

(30) Priority: 21.07.2022 KR 20220090558
(71) Applicant: LG Energy Solution, Ltd., Seoul 07335 (KR)
(72) Inventor: NAM, Gi Min, Daejeon 34122 (KR); KO, Yo Han, Daejeon 34122 (KR); KIM, Hyeong Seok, Daejeon 34122 (KR); PARK, Sun Ho, Daejeon 34122 (KR)
(74) Representative: Hoffmann Eitle
(86) International application number: PCT/KR2023/010517
(87) International publication number: WO 2024/019564

(57) **Abstract**

The present invention relates to an electrode assembly and a lithium secondary battery including the same, wherein the electrode assembly includes a negative electrode including a negative electrode active material layer; a positive electrode including a positive electrode active material layer; a separator; and a pore closure portion, wherein the separator is disposed between the negative electrode and the positive electrode, a width of the negative electrode active material layer is greater than a width of the positive electrode active material layer, the separator includes a separator main body portion that overlaps the positive electrode active material layer in a vertical direction and a separator extension portion that does not overlap the positive electrode active material layer in the vertical direction and extends from the separator main body portion, and the pore closure portion is disposed on one surface or both surfaces of the separator extension portion and may have a porosity of 1% or less.

## Description

### TECHNICAL FIELD

This application claims priority from Korean Patent Application No. 10-2022-0090558, filed on July 21, 2022, the disclosure of which is incorporated by reference herein.

The present invention relates to an electrode assembly including a pore closure portion and a lithium secondary battery including the same.

### BACKGROUND ART

Recently, miniaturization and weight reduction of electronic products, electronic devices, and communication devices have been rapidly progressed, and demand for improving performance of secondary batteries used as power sources for these products is also increasing as the need for electric vehicles grows significantly in relation to environmental issues. Among them, lithium secondary batteries are receiving considerable attention as high-performance batteries due to their high energy density and high standard electrode potential. The lithium secondary battery is generally composed of a positive electrode, a negative electrode, an electrolyte, and a separator. Specifically, the lithium secondary battery may be prepared by impregnating an electrode assembly, which includes the positive electrode, the negative electrode, and the separator disposed between the positive electrode and the negative electrode, with the electrolyte.

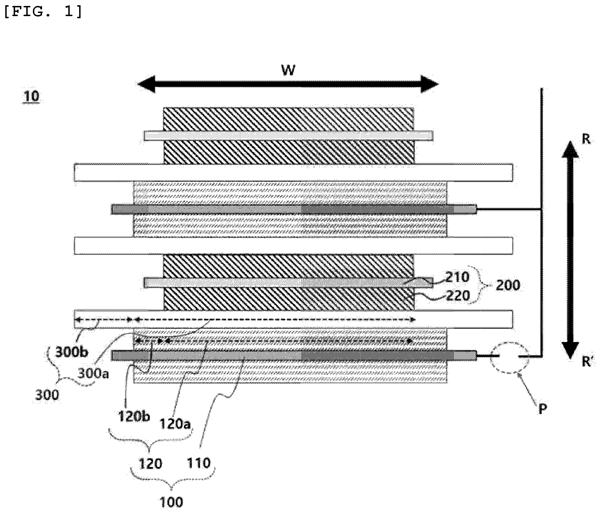

Specifically, referring to FIG. 1, an electrode assembly 10 includes a negative electrode 100, a positive electrode 200, and a separator 300, wherein the negative electrode 100 includes a negative electrode collector 110 and a negative electrode active material layer 120 disposed on the negative electrode collector, and the positive electrode 200 includes a positive electrode collector 210 and a positive electrode active material layer 220 disposed on the positive electrode collector. In general, a width (width in a direction W) of the negative electrode active material layer 120 is greater than a width (width in the direction W) of the positive electrode active material layer 220.

The negative electrode active material layer 120 may include a negative electrode main body portion 120a that overlaps the positive electrode active material layer 220 in a vertical direction R-R' and a negative electrode extension portion 120b that does not overlap the positive electrode active material layer 220 in the vertical direction R-R' and extends from the negative electrode main body portion 120a. Since the negative electrode main body portion 120a faces the positive electrode active material layer, a charge amount of the negative electrode main body portion 120a is greater than a charge amount of the negative electrode extension portion 120b.

In a battery operation process, if a disconnection P occurs in any one of the negative electrodes included in the electrode assembly for some reason, lithium ions in the electrolyte move to the negative electrode extension portion 120b, and electrons in the negative electrode main body portion 120a move to the negative electrode extension portion 120b. The lithium ions of the electrolyte and the moved electrons meet in the negative electrode extension portion 120b, wherein, if this phenomenon continues, a problem occurs in which lithium is precipitated on the negative electrode extension portion 120b. The precipitated lithium may short-circuit the positive electrode and negative electrode and may cause heat generation and ignition.

As the related art, there are techniques such as a method for checking whether lithium precipitation has occurred (Korean Patent Application Laid-open Publication No. 10-2017-0023583) or a method for preventing disconnection of a negative electrode (Korean Patent Application Laid-open Publication No. 10-2013-0050654), but there is no effective way to minimize the lithium precipitation in situations where the disconnection of the negative electrode occurs.

Thus, there is a need for a new electrode assembly that may minimize the above-described lithium precipitation when the negative electrode is disconnected.

### <Prior Art Document>

(Patent Document 1) Korean Patent Application Laid-open Publication No. 10-2017-0023583
(Patent Document 2) Korean Patent Application Laid-open Publication No. 10-2013-0050654

### DISCLOSURE OF THE INVENTION

### TECHNICAL PROBLEM

An aspect of the present invention provides an electrode assembly capable of minimizing lithium precipitation on a negative electrode.

Another aspect of the present invention provides a lithium secondary battery including the above electrode assembly.

### TECHNICAL SOLUTION

According to an embodiment of the present invention, there is provided an electrode assembly which includes a negative electrode including a negative electrode active material layer; a positive electrode including a positive electrode active material layer; a separator; and a pore closure portion, wherein the separator is disposed between the negative electrode and the positive electrode, a width of the negative electrode active material layer is greater than a width of the positive electrode active material layer, the separator includes a separator main body portion that overlaps the positive electrode active material layer in a vertical direction and a separator extension portion that does not overlap the positive electrode active material layer in the vertical direction and extends from the separator main body portion, and the pore closure portion is disposed on one surface or both surfaces of the separator extension portion and the pore closure portion has a porosity of 1% or less.

According to another embodiment of the present invention, there is provided a lithium secondary battery including the above electrode assembly and an electrolyte.

### ADVANTAGEOUS EFFECTS

According to the present invention, even if some negative electrodes in a battery are disconnected, a phenomenon, in which lithium is precipitated on an end of the negative electrode, may be suppressed. Accordingly, a short circuit between a positive electrode and the negative electrode may be prevented, and heat generation and ignition of the battery may be suppressed.

### BRIEF DESCRIPTION OF THE DRAWINGS

FIG. 1 is a cross-sectional view for explaining a conventional secondary battery.
FIG. 2 is a side cross-sectional view for explaining an electrode assembly of the present invention.
FIG. 3 is a plan view for explaining the electrode assembly of the present invention, wherein it is a view of region C of FIG. 2 from above.
FIG. 4 is a side cross-sectional view for explaining the electrode assembly of the present invention.
FIG. 5 is a side cross-sectional view for explaining the electrode assembly of the present invention.
FIG. 6 is a side cross-sectional view for explaining the electrode assembly of the present invention.
FIG. 7 is a view of region D of FIG. 6 from a direction S.
FIG. 8 is a graph illustrating a result of 7Li-NMR measurement for a lithium secondary battery of Example 1 of the present invention.
FIG. 9 is a graph illustrating a result of 7Li-NMR measurement for a lithium secondary battery of Example 2 of the present invention.
FIG. 10 is a graph illustrating a result of 7Li-NMR measurement for a lithium secondary battery of Comparative Example 1 of the present invention.
FIG. 11 is a graph illustrating a result of 7Li-NMR measurement for a lithium secondary battery of Comparative Example 2 of the present invention.
FIG. 12 is a graph illustrating a result of 7Li-NMR measurement for a lithium secondary battery of Comparative Example 3 of the present invention.
FIG. 13 is a photograph showing occurrence of lithium precipitation in the lithium secondary battery of Comparative Example 2 which is fully charged after disconnection of a negative electrode.
FIG. 14 is a photograph showing occurrence of lithium precipitation in the lithium secondary battery of Comparative Example 3 which is fully charged after disconnection of a negative electrode.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Porosity in this specification may be measured using a capillary flow porometer by Porous Materials Inc. at 25°C. A measurement range of pore size is 13 nm to 500 µm.

Air permeability in this specification may be measured under the following conditions using an Oken Type Air-permeability & Smoothness Testing Controller by ASAHI SEIKO CO., LTD.
Time: 6 sec
Value: 500
Measure Mode: JIS(sec)
Temperature: 25°C

A thickness (or maximum thickness) in this specification may be measured with TESA-µHITE.

A vertical direction in this specification corresponds to a direction R-R' in FIGS. 1, 2, 4, and 5, and specifically, a direction R corresponds to an upper direction and a direction R' corresponds to a lower direction.

7Li-NMR measurement conditions in this specification are as follows.
300 MHz solid NMR system;
MAS rotation speed: 32 kHz;
Spectrum frequency: 116.6420 MHz;
Temperature: Room temperature (25°C);
Chemical shift value standard: 1M LiCl in H₂O;
Pulse sequence: spin echo (90°-τ1- 180°-τ2);
Spectrum width: 500,000 Hz;
Pulse length: 1) 90° pulse length 2.25 µsec, 2) 180° pulse length 4.50 µsec;
Dwell time (τ1): 31.25 µsec;
Pulse delay: 2 sec

### <Electrode Assembly>

An electrode assembly according to an embodiment of the present invention includes a negative electrode including a negative electrode active material layer; a positive electrode including a positive electrode active material layer; a separator; and a pore closure portion, wherein the separator is disposed between the negative electrode and the positive electrode, a width of the negative electrode active material layer is greater than a width of the positive electrode active material layer, the separator includes a separator main body portion that overlaps the positive electrode active material layer in a vertical direction and a separator extension portion that does not overlap the positive electrode active material layer in the vertical direction and extends from the separator main body portion, and the pore closure portion is disposed on one surface or both surfaces of the separator extension portion and may have a porosity of 1% or less.

### 1) Negative Electrode

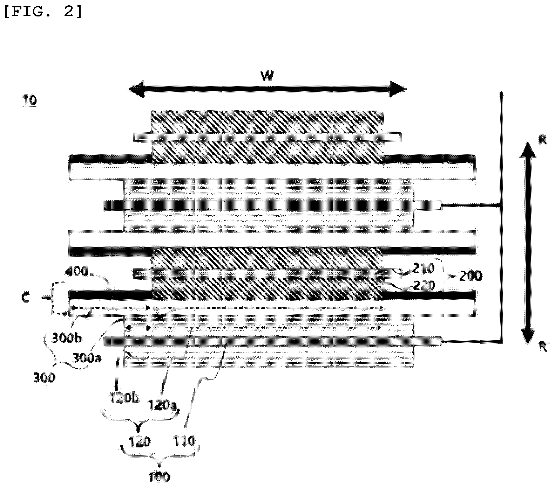

FIG. 2 is a side cross-sectional view for explaining the electrode assembly according to the embodiment of the present invention. Referring to FIG. 2, the electrode assembly 10 may include at least one negative electrode 100, and the electrode assembly 10 may specifically include a plurality of negative electrodes 100.

The negative electrode 100 may include a negative electrode active material layer 120. Specifically, the negative electrode 100 includes a negative electrode collector 110, and the negative electrode active material layer 120 may be disposed on one surface or both surfaces of the negative electrode collector 110.

The negative electrode collector 110 is not particularly limited as long as it is a material having conductivity without causing adverse chemical changes in the battery, and, for example, copper, stainless steel, aluminum, nickel, or titanium, alloys thereof, copper, stainless steel, aluminum, nickel, or titanium that is surface-treated with one of carbon, nickel, titanium, silver, or the like, or fired carbon may be used.

The negative electrode active material layer 120 may include a negative electrode active material, a negative electrode conductive agent, and a negative electrode binder.

The negative electrode active material may include a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which is cap able of being doped and undoped with lithium such as SiOᵥ(0<v<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as single-walled carbon nanotubes, double-walled carbon nanotubes, and multi-walled carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

Common binders used in the art may be used as the negative electrode binder, and a type thereof is not particularly limited. The binder, for example, may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluoro rubber, and various copolymers thereof, and any one thereof or a mixture of two or more thereof may be used.

The negative electrode active material layer 120 may include a negative electrode main body portion 120a and a negative electrode extension portion 120b. The negative electrode main body portion 120a may overlap the positive electrode active material layer 220 in a vertical direction R-R'. That is, the negative electrode main body portion 120a may face the positive electrode active material layer 220. The negative electrode extension portion 120b may extend from the negative electrode main body portion 120a. The negative electrode extension portion 120b may not overlap the positive electrode active material layer 220 in the vertical direction. The negative electrode extension portion 120b may be closer to an end of the negative electrode collector 110 than the negative electrode main body portion 120a.

### 2) Positive Electrode

Referring to FIG. 2, the electrode assembly 10 may include at least one positive electrode 200, and the electrode assembly 10 may specifically include a plurality of positive electrodes 200.

The positive electrode 200 may include a positive electrode active material layer 220. Specifically, the positive electrode 200 includes a positive electrode collector 210, and the positive electrode active material layer 220 may be disposed on one surface or both surfaces of the positive electrode collector 210.

The positive electrode collector 210 is not particularly limited as long as it is a material having conductivity without causing adverse chemical changes in the battery, and, for example, copper, stainless steel, aluminum, nickel, or titanium, alloys thereof, copper, stainless steel, aluminum, nickel, or titanium that is surface-treated with one of carbon, nickel, titanium, silver, or the like, or fired carbon may be used.

The positive electrode active material layer 220 may include a positive electrode active material, a positive electrode conductive agent, and a positive electrode binder.

The positive electrode active material may be a typically used positive electrode active material. Specifically, the positive electrode active material may include a layered compound, such as lithium cobalt oxide (LiCoO₂) and lithium nickel oxide (LiNiO₂), or a compound substituted with one or more transition metals; lithium iron oxides such as LiFe₃O₄; and Li₁₊ₐM_{b}O_{2+c}.

More specifically, the positive electrode active material may include Li₁₊ₐM_{b}O_{2+c}, wherein M may be at least one element selected from the group consisting of nickel (Ni), cobalt (Co), manganese (Mn), iron (Fe), phosphorus (P), aluminum (Al), magnesium (Mg), calcium (Ca), zirconium (Zr), zinc (Zn), titanium (Ti), ruthenium (Ru), niobium (Nb), tungsten (W), boron (B), silicon (Si), sodium (Na), potassium (K), molybdenum (Mo), and vanadium (V), and -0.2≤a≤0.2, 0<b≤2, and 0≤c≤2. a may preferably satisfy -0.1≤a≤0.1, more preferably, 0≤a≤0.1. Specifically, Li₁₊ₐMₑO_{2+c} may include Li₁₊ₐ[NiₚCo_{q}M¹ᵣM²ₛ]O₂ or may be Li₁₊ₐ[NiₚCo_{q}M¹ᵣM²ₛ]O₂. In Li₁₊ₐ[NiₚCo_{q}M¹ᵣM²ₛ]O₂, M¹ may be at least one element of Al and Mn, M² may be at least one element selected from the group consisting of Fe, P, Mg, Ca, Zr, Zn, Ti, Ru, Nb, W, B, Si, Na, K, Mo, and V, p may satisfy 0<p<1, preferably 0.3<p<1, and more preferably 0.5<p<1, q may satisfy 0<q<1, preferably 0<q<0.7, and more preferably 0<q<0.5, r may satisfy 0<r<1, preferably 0<r<0.7, and more preferably 0<r<0.5, and s may satisfy 0≤s≤0.2, preferably, 0≤s≤0.1. Li₁₊ₐMₑO_{2+c} may include at least one selected from the group consisting of LiCoO₂, LiNiO₂, LiMnO₂, Li[Ni_{0.5}Co_{0.3}Mn_{0.2}]O₂, Li[Ni_{0.6}Co_{0.2}Mn_{0.2}]O₂, Li[Ni_{0.7}Co_{0.1}Mn_{0.2}]O₂, Li[Ni_{0.8}Co_{0.1}Mn_{0.1}]O₂, Li[Ni_{0.9}CO_{0.05}Mn_{0.05}]O₂, LiMn₂O₄, LiFePO₄, and 0.5Li₂MnO₃·0.5Li[Mn_{0.4}Ni_{0.3}CO_{0.3}]O₂. Preferably, Li₁₊ₐMₑO_{2+c} may include any one of Li[Ni_{0.6}CO_{0.2}Mn_{0.2}]O₂, Li[Ni_{0.7}Co_{0.1}Mn_{0.2}]O₂, Li[Ni_{0.8}Co_{0.1}Mn_{0.1}]O₂, and Li[Ni_{0.9}Co_{0.09}Mn_{0.05}]O₂.

The positive electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as single-walled carbon nanotubes, double-walled carbon nanotubes, and multi-walled carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

Common binders used in the art may be used as the positive electrode binder, and a type thereof is not particularly limited. The binder, for example, may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluoro rubber, and various copolymers thereof, and any one thereof or a mixture of two or more thereof may be used.

A width of the negative electrode active material layer 120 may be greater than a width of the positive electrode active material layer 220. Herein, the width refers to a width of the negative electrode active material layer or the positive electrode active material layer which is parallel to a direction W in FIGS. 2 and 4 to 6. Since the width of the negative electrode active material layer is greater than the width of the positive electrode active material layer, there is an effect of suppressing lithium precipitation (Li plating) during battery charging.

### 3) Separator

The separator 300 separates the negative electrode 100 and the positive electrode 200 and may provide a movement path of lithium ions. The separator 300 may be disposed between the negative electrode 100 and the positive electrode 200 to space the negative electrode 100 and the positive electrode 200 apart. The electrode assembly 10 may include at least one separator 300, and may also specifically include a plurality of separators 300.

As the separator 300, any separator may be used without particular limitation as long as it is typically used in a lithium secondary battery, and particularly, a separator having high moisture-retention ability for an electrolyte solution as well as low resistance to the transfer of electrolyte ions is preferable. Specifically, a porous polymer film, for example, a porous polymer film prepared from a polyolefin-based polymer, such as an ethylene homopolymer (polyethylene), a propylene homopolymer (polypropylene), an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used.

Furthermore, the separator 300 uses the above-described material as a substrate, and may also include a coating layer disposed on the substrate. The coating layer may include at least one of inorganic particles and a polymer. Heat resistance or mechanical strength may be improved by the coating layer. The coating layer may have a single layer or multilayer structure.

The separator 300 may include a separator main body portion 300a and a separator extension portion 300b. The separator main body portion 300a may overlap the positive electrode active material layer 220 in the vertical direction R-R'. The separator main body portion 300a may face the positive electrode active material layer 220. The separator extension portion 300b may extend from the separator main body portion 300a. The separator extension portion 300b may not overlap the positive electrode active material layer 220 in the vertical direction R-R'.

### 4) Pore Closure Portion

The pore closure portion acts to suppress a phenomenon in which a large amount of lithium ions directly moves to the negative electrode extension portion. Accordingly, a phenomenon, in which lithium is precipitated on the negative electrode extension portion when the negative electrode is disconnected, may be reduced. Thus, a problem of short circuiting between the negative electrode and the positive electrode in the battery may be prevented, and heat generation and ignition of the battery may be suppressed.

The pore closure portion may have a porosity of 1% or less, particularly 0% to 1%, and more particularly 0% to 0.8%, for example, 0% to 0.5%. Since the porosity of the pore closure portion is 1% or less, an amount of lithium ions directly transferred from the electrolyte to the negative electrode extension portion may be significantly reduced, and thus, the phenomenon, in which lithium is precipitated on the negative electrode extension portion when the negative electrode is disconnected, may be reduced. In contrast, in a case in which the porosity of the pore closure portion is greater than 1%, the phenomenon, in which the lithium ions move from the electrolyte to the negative electrode extension portion, may not be effectively suppressed, and accordingly, it is difficult to prevent the lithium precipitation phenomenon in the negative electrode extension portion.

The pore closure portion may have an air permeability of 1,500 sec/100 cc or more, particularly 1,500 sec/100 cc to 10,000 sec/100 cc, and more particularly 1,500 sec/100 cc to 8,000 sec/100 cc, for example, 1,500 sec/100 cc to 5,500 sec/100 cc. Since the amount of lithium ions directly transferred from the electrolyte to the negative electrode extension portion may be significantly reduced when the above range is satisfied, the phenomenon, in which lithium is precipitated on the negative electrode extension portion when the negative electrode is disconnected, may be reduced.

Referring to FIGS. 2 to 5, the pore closure portion 400 may be disposed on one surface or both surfaces of the separator extension portion 300b. Specifically, the pore closure portion 400 may be disposed on an entire region of the one surface or both surfaces of the separator extension portion 300b. In this case, one end of the pore closure portion 400 may be disposed on the same line as one end of the separator 300. That is, the pore closure portion 400 may cover an upper surface and/or lower surface of the separator extension portion 300b up to an edge of the separator 300.

Referring to FIG. 2, the pore closure portion 400 may be disposed on one surface of the separator extension portion 300b, and specifically, the one surface of the separator extension portion 300b where the pore closure portion 400 is disposed may be disposed in the same direction as a surface of the separator main body portion 300a (the separator main body portion 300a attached to the separator extension portion 300b) in contact with the positive electrode active material layer 220. In a case in which the pore closure portion 400 is formed on a surface facing the positive electrode active material layer, the lithium precipitation may be suppressed while minimizing a loss of negative electrode loading amount.

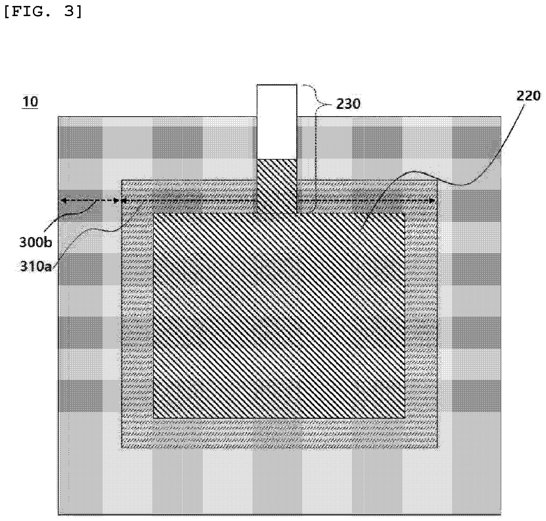

FIG. 3 corresponds a view of region C of FIG. 2 from above. Referring to FIG. 3, the pore closure portion 400 may be disposed surrounding the positive electrode active material layer 220.

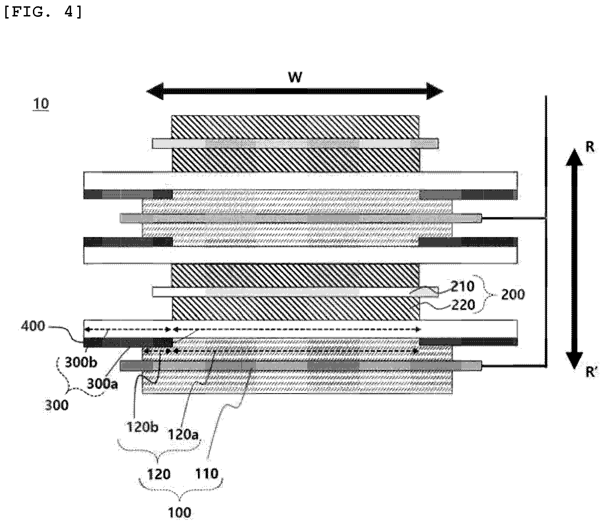

Referring to FIG. 4, the pore closure portion 400 is disposed on one surface of the separator extension portion 300b, wherein it may be disposed in the same direction as a surface of the separator main body portion 300a (the separator main body portion 300a attached to the separator extension portion 300b) in contact with the negative electrode active material layer 120. In this case, transfer of lithium ions present in pores of the separator to the negative electrode extension portion may be more effectively suppressed.

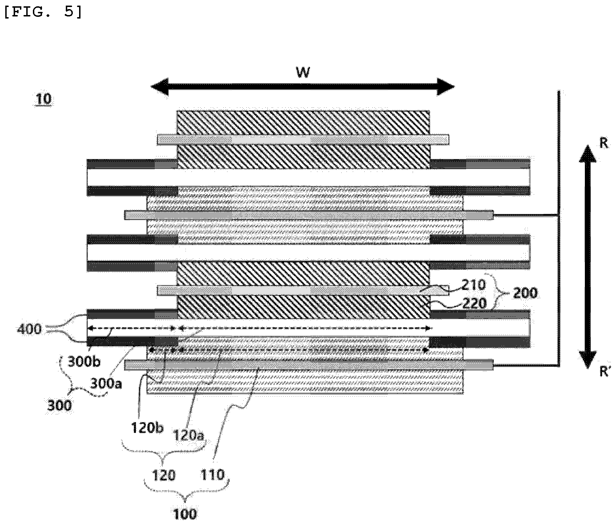

Also, referring to FIG. 5, the pore closure portion 400 may be disposed on both surfaces of the separator extension portion 300b. In this case, the lithium precipitation on the negative electrode extension portion may be more effectively suppressed.

Referring to FIGS. 2 to 5, the pore closure portion 400 may overlap the negative electrode extension portion 120b in the vertical direction R-R'. Accordingly, since the amount of lithium ions directly transferred from the electrolyte to the negative electrode extension portion may be significantly reduced, the phenomenon, in which lithium is precipitated on the negative electrode extension portion when the negative electrode is disconnected, may be reduced.

Furthermore, the pore closure portion 400 may not overlap the negative electrode main body portion 120a in the vertical direction R-R'. Thus, movement of lithium ions (movement of lithium ions from the positive electrode to the negative electrode), which occurs during a normal operation of the battery, may be smoothly performed.

The pore closure portion may include a polymer, for example, may be formed of a polymer. The polymer may include at least one selected from the group consisting of polyethylene (PE), polypropylene (PP), polyimide (PI), and polymethyl methacrylate (PMMA). Since the pore closure portion includes the polymer, the pore closure portion may be effectively attached to the separator extension portion, and thus, stability of the battery may be further improved.

The polymer included in the pore closure portion may be the same as the polymer material included in the separator (the separator main body portion, the separator extension portion). For example, when the separator includes at least one of polyethylene and polypropylene, the polymer included in the pore closure portion may also be at least one of polyethylene and polypropylene. In this case, since adhesion between the pore closure portion and the separator extension portion is increased, safety may be further improved.

The polymer may be included in the pore closure portion in an amount of 15 wt% to 100 wt%, particularly 15 wt% to 50 wt%, and more particularly 15 wt% to 30 wt%. When the above range is satisfied, the porosity of the pore closure portion may be easily adjusted to 1% or less.

In some cases, the pore closure portion may further include inorganic particles in addition to the polymer. The inorganic particles may include at least one selected from the group consisting of BaTiO₃, Al₂O₃, ZrO₂, and TiO₂. Since the inorganic particles improve heat resistance of the separator extension portion and the pore closure portion, battery safety may be improved.

The inorganic particles may be included in the pore closure portion in an amount of 85 wt% or less, particularly 50 wt% to 85 wt%, and more particularly 70 wt% to 85 wt%. When the above range is satisfied, the porosity may be easily adjusted to 1% or less while the heat resistance of the pore closure portion is improved.

A maximum thickness of the pore closure portion may be in a range of 10 µm to 20 µm, particularly 12 µm to 20 µm, and more particularly 14 µm to 20 µm. When the above range is satisfied, excessive transfer of lithium ions from the electrolyte to the negative electrode extension portion may be suppressed, and an overall battery thickness may be uniform because a thickness of the pore closure portion is not excessively large.

Specifically, the pore closure portion may be composed of a base layer that is formed of the polymer, or may include the base layer and a reinforced coating layer which is disposed on the base layer and includes the inorganic particles. Accordingly, the heat resistance of the pore closure portion may be enhanced to further improve the safety of the battery.

The porosity and/or air permeability of the pore closure portion of the present invention may be adjusted by adjusting porosity of the polymer constituting the pore closure portion, a type of the inorganic particles, and/or the amounts of the polymer and the inorganic particles. For example, in a case in which the pore closure portion is composed of the base layer and the reinforced coating layer, by adjusting a type of polymer or a degree of stretching of the base layer s o as to adjust porosity of the base layer to be 1% or less, the porosity of the pore closure portion may be adjusted to 1% or less. Also, even in a case in which the porosity of the base layer is 1% or more, the porosity of the pore closure portion may be adjusted to 1% or less by forming a coating layer with low porosity on a surface of the base layer.

The base layer may have a thickness of 9 µm to 15 µm, specifically, 10 µm to 13 µm. The reinforced coating layer may have a thickness of 1 µm to 5 µm, specifically, 2 µm to 5 µm. When the above ranges are satisfied, the heat resistance of the pore closure portion may be effectively improved while the effect of suppressing the lithium precipitation is achieved.

### 5) Others

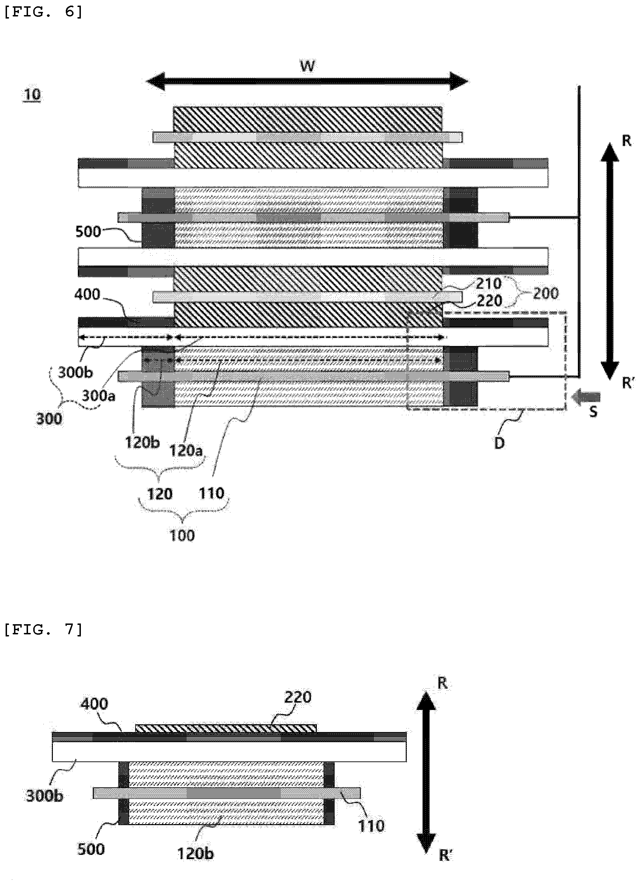

The electrode assembly may further include a pore closure layer 500. FIG. 6 illustrates a cross section of the electrode assembly, and FIG. 7 is a cross section of region D of the electrode assembly of FIG. 6 viewed from a direction S. Referring to FIGS. 6 and 7, the pore closure layer 500 is present in addition to the above-described pore closure portion 400.

The pore closure layer 500 may cover at least a portion of a side surface of the negative electrode extension portion 120b. Accordingly, the lithium ions moving from the electrolyte to the negative electrode extension portion may be more effectively reduced. Accordingly, the phenomenon, in which lithium is precipitated on the negative electrode extension portion when the negative electrode is disconnected, may be more effectively suppressed.

Since structure and material constituting the pore closure layer may be the same as structure and material constituting the above-described pore closure portion, a description thereof will be omitted.

### <Lithium Secondary Battery>

A lithium secondary battery according to another embodiment of the present invention may include the electrode assembly of the above-described embodiment and an electrolyte.

The electrolyte may be an organic liquid electrolyte or an inorganic liquid electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, since ethylene carbonate and propylene carbonate, cyclic carbonates among the carbonate-based organic solvents, well dissociate a lithium salt due to high dielectric constants as high-viscosity organic solvents, the cyclic carbonate may be preferably used, and, since an electrolyte having high electrical conductivity may be prepared when the cyclic carbonate is mixed with low-viscosity, low-dielectric constant linear carbonate, such as dimethyl carbonate and diethyl carbonate, in an appropriate ratio, the cyclic carbonate may be more preferably used.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the lithium secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples are presented in order to help better understanding of the present invention, but the following examples are merely presented to exemplify the present invention, it will be apparent to those skilled in the art that various modifications and alterations are possible within the scope and technical spirit of the present invention, and such modifications and alterations fall within the scope of claims included herein.

### Example and Comparative Examples

### Example 1

### (1) Preparation of Electrode Assembly

A pore closure portion having a porosity of 0.5% and an air permeability of 5,500 sec/100 cc was formed on a portion of both surfaces of a porous polyethylene separator. Specifically, the pore closure portion was prepared by coating a 3 µm thick reinforced coating layer containing Al₂O₃ on both surfaces of a base layer (12 µm thick) formed of polyethylene, and the separator having the pore closure portion formed thereon was prepared by a method in which the pore closure portion configured as described above was disposed on a surface of the separator (i.e., separator extension portion) which did not overlap a positive electrode active material layer after assembling an electrode assembly.

Next, a negative electrode including a copper current collector and a negative electrode active material layer disposed on both surfaces of the copper current collector was prepared. The negative electrode active material layer included a mixture of artificial graphite and natural graphite as a negative electrode active material, a mixture of styrene-butadiene rubber (SBR) and carboxymethyl cellulose (CMC) as a negative electrode binder, and carbon black as a negative electrode conductive agent.

Also, a positive electrode including an aluminum current collector and a positive electrode active material layer disposed on both surfaces of the aluminum current collector was prepared. The positive electrode active material layer included Li[Ni_{0.6}Co_{0.2}Mn_{0.2}]O₂ as a positive electrode active material, polyvinylidene fluoride (PVdF) as a positive electrode binder, and carbon black as a positive electrode conductive agent.

An electrode assembly having a structure of negative electrode/separator/positive electrode/separator/negative electrode/separator/positive electrode/separator/negative electrode was prepared by stacking the three negative electrodes and two positive electrodes prepared above while disposing the separator having the pore closure portion formed thereon between the negative electrode and the positive electrode. Then, the negative electrodes were electrically connected to each other using a negative electrode tab, and the positive electrodes were electrically connected to each other using a positive electrode tab.

### (2) Preparation of Lithium Secondary Battery

After putting the electrode assembly into a battery case, an electrolyte was injected into the battery case to impregnate the electrode assembly with the electrolyte. Thereafter, the battery case was sealed. The electrolyte included a non-aqueous solvent containing ethylene carbonate (EC) and ethylmethyl carbonate (EMC) in a volume ratio of 1:2 and lithium hexafluorophosphate (1 M of LiPF₆).

### Example 2

A lithium secondary battery was prepared in the same manner as in Example 1 except that a pore closures portion having a porosity of 0.1% and an air permeability of 10,000 sec/100 cc or more was formed on a portion of both surfaces of a porous polyethylene separator.

### Comparative Example 1

A lithium secondary battery was prepared in the same manner as in Example 1 except that a separator, on which a pore closure portion was not formed, was used.

### Comparative Example 2

A lithium secondary battery was prepared in the same manner as in Example 1 except that a pore closures portion having a porosity of 3% and an air permeability of 1,500 sec/100 cc was formed on a portion of both surfaces of a porous polyethylene separator.

### Comparative Example 3

A lithium secondary battery was prepared in the same manner as in Example 1 except that a pore closures portion having a porosity of 10% and an air permeability of 1,500 sec/100 cc was formed on a portion of both surfaces of a porous polyethylene separator.

### Experimental Example 1: Confirmation of Occurrence of Lithium Precipitation

7Li-NMR evaluation was performed on negative electrode extension portions of the examples and the comparative examples. Specifically, 4.2 V constant current/constant voltage (CC/CV) charging was performed at 1/3 C at 25°C to fully charge the battery with a current cut of 5%. Thereafter, the negative electrode located at a bottom of the electrode assembly was separated from the tab to disconnect the corresponding negative electrode.

Thereafter, the battery was left standing for 60 minutes, and then CC discharged to 2.5 V at 1/3 C. After discharging, in order to confirm occurrence of lithium precipitation, 4.2 V CC/CV charging (5% current cut-off) was performed at 1/3 C at 25°C to fully charge the battery.

Thereafter, the disconnected negative electrode was separated to perform 7Li-NMR evaluation on the negative electrode extension portion.

7Li-NMR measurement conditions were as follows.
300 MHz solid NMR system
MAS rotation speed: 32 kHz
Spectrum frequency: 116.6420 MHz
Temperature: Room temperature (25°C)
Chemical shift value standard: 1M LiCl in H₂O
Pulse sequence: spin echo (90°-τ1- 180°-τ2)
Spectrum width: 500,000 Hz
Pulse length: 1) 90° pulse length 2.25 µsec, 2) 180° pulse length 4.50 µsec
Dwell time (τ1): 31.25 µsec
Pulse delay: 2 sec

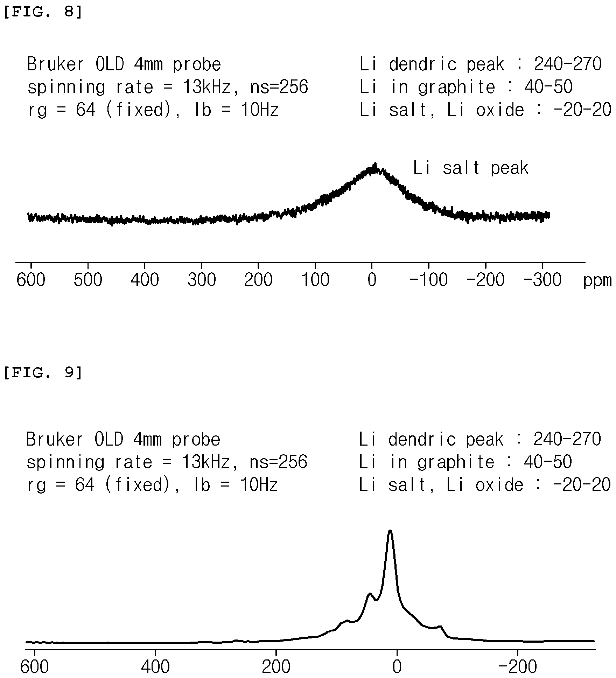

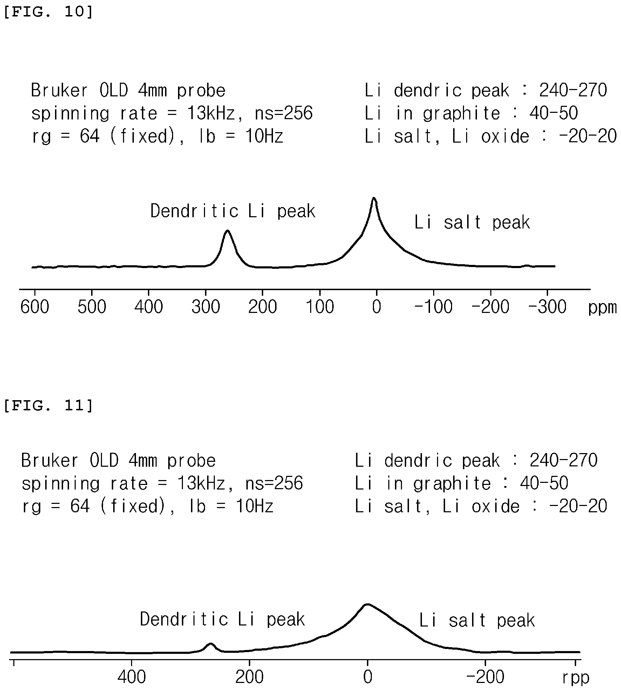

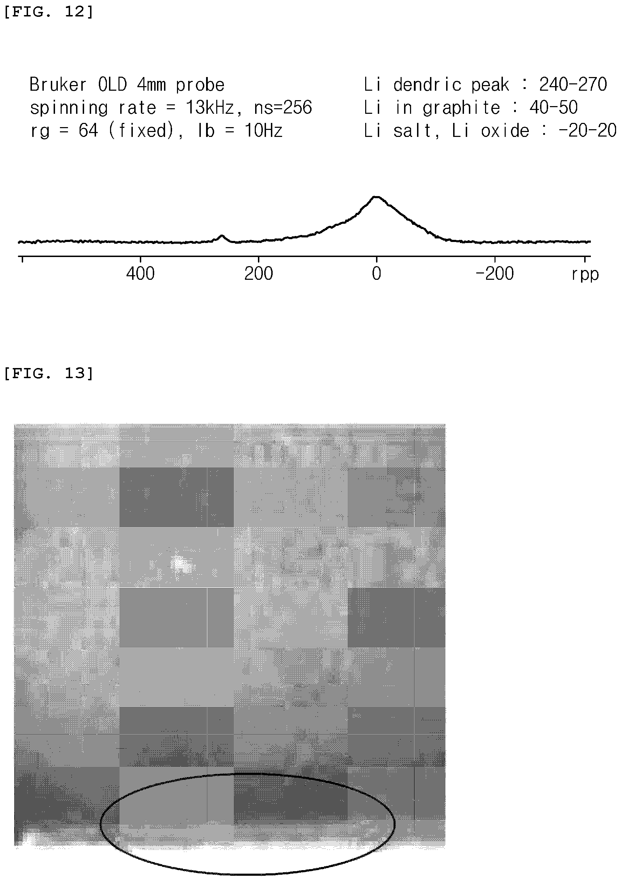

FIG. 8 is 7Li-NMR results for the disconnected negative electrode of the lithium secondary battery of Example 1, FIG. 9 is 7Li-NMR results for the disconnected negative electrode of the lithium secondary battery of Example 2, FIG. 10 is 7Li-NMR results for the disconnected negative electrode of the lithium secondary battery of Comparative Example 1, FIG. 11 is 7Li-NMR results for the disconnected negative electrode of the lithium secondary battery of Comparative Example 2, and FIG. 12 is 7Li-NMR results for the disconnected negative electrode of the lithium secondary battery of Comparative Example 3.

In 7Li-NMR, a peak corresponding to lithium precipitation is found in a range of 240 ppm to 270 ppm. Referring to FIGS. 8 and 9, since lithium precipitation did not occur in the lithium secondary batteries of Examples 1 and 2, it may be understood that a peak corresponding to the lithium precipitation was not found. In contrast, referring to FIGS. 10 to 12, with respect to the lithium secondary batteries of Comparative Examples 1 to 3, it may be understood that a peak corresponding to the lithium precipitation occurred.

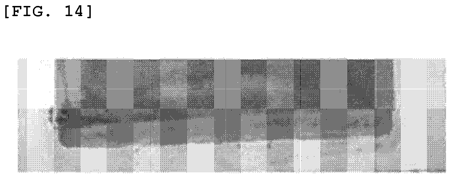

Also, FIGS. 13 and 14 are photographs showing states of the lithium secondary batteries of Comparative Examples 2 and 3 which were fully charged after the negative electrode was disconnected, respectively. According to FIGS. 12 and 13, it may be confirmed that lithium precipitation occurred in the lithium secondary batteries of Comparative Examples 2 and 3 in which the porosity of the pore closure portion was greater than 1%.

### <Description of the Symbols>

- 10:: Electrode Assembly
- 100:: Negative Electrode
- 110:: Negative Electrode Collector
- 120:: Negative Electrode Active Material Layer
- 200:: Positive Electrode
- 210:: Positive Electrode Collector
- 220:: Positive Electrode Active Material Layer
- 300:: Separator
- 300a:: Separator Main Body Portion
- 300b:: Separator Extension Portion
- 400:: Pore Closure Portion
- 120a:: Negative Electrode Main Body Portion
- 120b:: Negative Electrode Extension Portion
- 500:: Pore Closure Layer

## Claims

1. An electrode assembly comprising:
a negative electrode including a negative electrode active material layer;
a positive electrode including a positive electrode active material layer;
a separator; and
a pore closure portion,
wherein the separator is disposed between the negative electrode and the positive electrode,
a width of the negative electrode active material layer is greater than a width of the positive electrode active material layer,
the separator comprises a separator main body portion that overlaps the positive electrode active material layer in a vertical direction and a separator extension portion that does not overlap the positive electrode active material layer in the vertical direction and extends from the separator main body portion, and
the pore closure portion is disposed on one surface or both surfaces of the separator extension portion, and
the pore closure portion has a porosity of 1% or less.

2. The electrode assembly of claim 1, wherein the pore closure portion is disposed on an entire region of the one surface or both surfaces of the separator extension portion.

3. The electrode assembly of claim 1, wherein one end of the pore closure portion is disposed on a same line as one end of the separator.

4. The electrode assembly of claim 1, wherein the negative electrode active material layer comprises a negative electrode main body portion that overlaps the positive electrode active material layer in the vertical direction and a negative electrode extension portion that does not overlap the positive electrode active material layer in the vertical direction and extends from the negative electrode main body portion, and
the pore closure portion overlaps the negative electrode extension portion in the vertical direction.

5. The electrode assembly of claim 1, wherein the pore closure portion comprises a polymer,
wherein the polymer comprises at least one selected from the group consisting of polyethylene, polypropylene, polyimide, and polymethyl methacrylate.

6. The electrode assembly of claim 5, wherein the pore closure portion further comprises inorganic particles.

7. The electrode assembly of claim 1, wherein the pore closure portion has an air permeability of 1,500 sec/100 cc or more.

8. The electrode assembly of claim 1, wherein a maximum thickness of the pore closure portion is in a range of 10 µm to 20 µm.

9. The electrode assembly of claim 4, further comprising a pore closure layer,
wherein the pore closure layer covers at least a portio n of a side surface of the negative electrode extension porti on, and
the pore closure layer has a porosity of 1% or less.

10. A lithium secondary battery comprising the electrode assembly of claim 1 and an electrolyte.
